# EUROPÄISCHE PATENTSCHRIFT

(11) **EP 2 029 869 B1**
(45) Veröffentlichungstag und Bekanntmachung des Hinweises auf die Patenterteilung: **26.05.2010**
(21) Anmeldenummer: 07723371.6
(22) Anmeldetag: 19.03.2007
(51) Int. Cl.: F02D 19/06, F01N 11/00

(54) **BIVALENTE BRENNKRAFTMASCHINE UND VERFAHREN ZUM BETRIEB EINER BIVALENTEN BRENNKRAFTMASCHINE**
BIVALENT INTERNAL COMBUSTION ENGINE AND METHOD OF OPERATING A BIVALENT INTERNAL COMBUSTION ENGINE
MOTEUR À COMBUSTION INTERNE BIVALENT ET PROCÉDÉ DE FONCTIONNEMENT D'UN MOTEUR À COMBUSTION INTERNE BIVALENT

(30) Priorität: 31.05.2006 DE 102006025259
(43) Veröffentlichungstag der Anmeldung: 04.03.2009
(73) Patentinhaber: Volkswagen, 38436 Wolfsburg (DE)
(72) Erfinder: POTT, Ekkehard, 38518 Gifhorn (DE); DEGEN, Alf, 38536 Meinersen (DE); BERGMANN, Helge, 38126 Braunschweig (DE)
(74) Vertreter: Pohlmann, Bernd Michael
(86) Internationale Anmeldenummer: PCT/EP2007/002404
(87) Internationale Veröffentlichungsnummer: WO 2007/137642

(56) Entgegenhaltungen:
- EP-A1- 1 574 690
- EP-A2- 0 430 269
- DE-A1- 10 121 609
- DE-A1- 10 146 063
- DE-T2- 60 005 751
- JP-A- 2001 193 511
- JP-A- 2004 190 935
- JP-A- 2004 353 541

## Beschreibung

Die Erfindung betrifft eine bivalente Brennkraftmaschine und ein Verfahren zum Betrieb einer bivalenten Brennkraftmaschine gemäß der Oberbegriffe der Ansprüche 1 und 19.

Alternative Kraftstoffe wie beispielsweise Erdgas haben in Hinblick auf die begrenzten Rohölreserven und die vom Gesetzgeber immer enger werdenden Grenzen der Schadstoffemission in letzter Zeit an Bedeutung gewonnen. Verbrennungsmotorisch interessant ist beispielsweise Erdgas vor allem wegen seiner hohen Oktanzahl und damit hohen Klopffestigkeit und relativ hohen Energiedichte. Ein weiterer Vorteil ist der im Vergleich zu Benzin niedrige Gehalt an Katalysatorgiften wie Phosphor und Schwefel und der im Vergleich zu Benzin oder Diesel geringe Kohlenstoffanteil. Erdgas hat somit gute Verbrennungseigenschaften bei geringem Schadstoffausstoß und verminderter CO₂-Emission. Als gasförmige Kraftstoffe haben vor allem hoch verdichtetes Erdgas CNG (Compressed Natural Gas) und Wasserstoff sowie verflüssigtes Erdölgas LPG (Liquified Petroleum Gas) Bedeutung erlangt.

Um den Betrieb eines Kraftfahrzeuges sowohl mit flüssigem als auch mit gasförmigem Kraftstoff zu betreiben, sind bivalente Motorkonzepte entwickelt worden, die den Betrieb eines Verbrennungsmotors mit beiden Kraftstoffarten ermöglichen. Derartige Konzepte sind beispielsweise in der DE 600 05 751 T2, der DE 101 46 063 A1 und der DE 101 21 609 A1 beschrieben. Dabei sind dem Verbrennungsmotor zwei Zuführungssysteme zugeordnet. Die Wahl der Betriebsart erfolgt mittels eines Umschaltventils und ist in der Regel manuell einstellbar oder durch die Motorsteuerung vorgebbar.

Gemäß der DE 600 05 751 T2 und der DE 101 21 609 A1 wird die Umschaltung von einem flüssigen Kraftstoff auf einen gasförmigen Kraftstoff und umgekehrt gesteuert um einen sicheren Betrieb der Brennkraftmaschine zu gewährleisten. Die Steuerung erfolgt beispielsweise in Abhängigkeit vom Betriebszustand des Motors, insbesondere der Betriebstemperatur oder des thermischen Zustandes von Komponenten des Motors.

Da im bivalenten Betrieb der Verbrennungsmotor für den Betrieb mit flüssigem als auch mit gasförmigen Kraftstoff ausgelegt sein muss, kommt es beim Erdgasbetrieb zu Leistungseinbußen gegenüber dem Benzinbetrieb, da ein mit Erdgas betriebener Ottomotor nicht optimal auf den Erdgasbetrieb eingestellt ist. Diese sind in der Regel auf den Benzinbetrieb optimiert. Für den Erdgasbetrieb wäre eine höhere Verdichtung nötig, um den Energiegehalt von Erdgas besser ausnutzen zu können. Dadurch verschlechtert sich das Fahrverhalten in Start- und Beschleunigungsphasen beim Betrieb des Verbrennungsmotors mit gasförmigem Kraftstoff. Andererseits ist der Betrieb des Verbrennungsmotors insbesondere in der Kaltstartphase mit flüssigem Kraftstoff mit einer hohen Schadstoffemission verbunden.

Aufgabe der Erfindung ist es, das Fahrverhalten von Fahrzeugen mit einer bivalenten Brennkraftmaschine in der Startphase bei einer Verringerung der Gesamtemission zu verbessern.

Die Lösung der Aufgabe gelingt mit einem Verfahren zum Betrieb einer Brennkraftmaschine gemäß Anspruch 1 und einer bivalenten Brennkraftmaschine gemäß Anspruch 19. Weitere vorteilhafte Ausgestaltungen finden sich in den abhängigen Ansprüchen.

Die erfindungsgemäße bivalenten Brennkraftmaschine umfasst eine Abgasanlage mit zumindest einem Katalysator und eine Steuereinrichtung zum Umstellen von einem Betrieb mit einem flüssigen Kraftstoff auf einen Betrieb mit einem gasförmigen Kraftstoff nach einer Startphase zu einem Umschaltzeitpunktes t₁, wobei die Steuereinrichtung Komponenten zur Einstellung und/oder Anpassung des Umschaltzeitpunktes t₁ in Abhängigkeit von zumindest einem Alterungsparameter des Katalysators aufweist.

Erfindungsgemäß wird bei einem Verfahren zum Betrieb einer bivalenten Brennkraftmaschine mit einer Abgasanlage, welche zumindest einem Katalysator aufweist, die Brennkraftmaschine beim Starten mit einem flüssigem Kraftstoff betrieben und nach einer Startphase auf einen Betrieb mit einem gasförmigen Kraftstoff umgestellt, wobei die Umstellung vom flüssigen zum gasförmigen Kraftstoff zu einem Umschaltzeitpunkt t₁ erfolgt, welcher in Abhängigkeit von zumindest einem Alterungsparameter des Katalysators eingestellt wird. Bei einer Veränderung des zumindest einen Alterungsparameter des Katalysators wird der Umschaltzeitpunkt t₁ entsprechend angepasst und/oder verändert.

Dabei wird der Umschaltzeitpunkt t₁ vorzugsweise derart in Abhängigkeit von zumindest einem Alterungsparameter des Katalysators eingestellt und/oder verändert und/oder angepasst, dass beim Starten der Brennkraftmaschine eine Umstellung nach einer Startphase von einem Betrieb mit flüssigen Brennstoff auf einen Betrieb mit einem gasförmigen Kraftstoff erst bei hinreichend aktivem Katalysator erfolgt.

Der Umschaltzeitpunkt t₁ kann vorzugsweise auch derart eingestellt und/oder verändert und/oder angepasst werden, dass innerhalb eines Fahrzyklus eine minimale Abgasemission erfolgt oder derart, dass hinreichend niedrige Emissionswerte bei einem minimal erforderlichen Kraftstoffverbrauch eingestellt und entsprechend der Alterung des Katalysators verändert werden. Generell wird dabei die Startphase mit zunehmender Alterung des Katalysators verlängert.

Als gasförmige Kraftstoffe werden beispielsweise Erdgas (CNG Compressed Natural Gas), Wasserstoff, Flüssigerdgas (LNG Liquified Natural Gas) oder Flüssiggas (LPG Liquified Petroleum Gas) verwendet und als flüssiger Kraftstoff wird beispielsweise Benzin verwendet.

In einer vorteilhaften Ausgestaltung der Erfindung erfolgt die Umstellung auf den gasförmigen Kraftstoff gleitend, wobei die Umstellung auf den gasförmigen Kraftstoff zum Umschaltzeitpunkt t₁ beginnt und nach einer Umstellphase zum Zeitpunkt t₂ beendet ist. Dabei kann der Zeitpunkt t₂ ebenfalls in Abhängigkeit von zumindest einem Alterungsparameter des Katalysators, insbesondere mittels Komponenten der Steuereinrichtung, eingestellt werden. Durch eine gleitende Umstellung kann der Alterungszustand eines Katalysators individuell berücksichtigt werden. So wird bei einem noch nicht gealterten Katalysator bereits frühzeitig mit einer kurzen Umstellphase und bei einem gealterten Katalysator später mit längerer Umstellphase auf den Gasbetrieb umgestellt, so dass die Abgasemission verringert wird.

In einer weiteren vorteilhaften Ausgestaltung der Erfindung wird zumindest ein Alterungsparameter des Katalysators im Rahmen einer On-Board-Diagnose, bei welcher eine Überwachung abgasrelevanten Komponenten und/oder Systeme, insbesondere des Katalysators erfolgt, ermittelt. Damit können im Rahmen einer On-Board-Diagnose des Katalysators ermittelte Parameter gleichzeitig für die Einstellung des Umschaltzeitpunktes t₁ und/oder des Zeitpunktes t₂ verwendet werden, sodass keine zusätzlichen Sensoren oder Komponenten zur Ermittlung von Alterungsparametern erforderlich sind.

Alternativ oder zusätzlich wird zumindest ein Alterungsparameter des Katalysators vorzugsweise aus einem Modell des Katalysators mit einer Parameterkorrektur, welche die Alterung des Katalysators berücksichtigt, ermittelt. Ein derartiges Modell kann vorzugsweise als Komponente der Steuereinrichtung ausgebildet sein.

Der oder die ermittelten Alterungsparameter des Katalysators werden vorzugsweise in einem Speicher der Steuereinrichtung abgelegt und/oder gespeichert, sodass diese für eine Ermittlung des Umschaltzeitpunktes t₁ und/oder des Zeitpunktes t₂ abrufbar sind.

Eine mittelbare oder unmittelbare Bestimmung des Umschaltzeitpunktes t₁ und/oder des Zeitpunktes t₂ erfolgt vorzugsweise mittels zumindest einer Parameterkennlinie eines Alterungsparameters oder mittels zumindest eines Parameterkennlinienfeldes zumindest eines Alterungsparameters, welche vorzugsweise ebenfalls in der Steuereinrichtung abgelegt sind.

Als Alterungsparameter werden vorzugsweise eine Speicherfähigkeit des Katalysators bezüglich zumindest einer Schadstoffkomponente, insbesondere eine NOx-Speicherfähigkeit und/oder eine O₂-Speicherfähigkeit des Katalysators und/oder eine Katalysatortemperatur, insbesondere eine Anspringtemperatur des Katalysators ermittelt.

Bei einer unmittelbaren Bestimmung des Umschaltzeitpunktes t₁ und/oder des Zeitpunktes t₂ aus zumindest einem ermittelten Alterungsparameter erfolgt die Umstellung von flüssigen auf gasförmigen Kraftstoff vorzugsweise über eine reine Zeitsteuerung nach Start, wobei der Umschaltzeitpunktes t₁ und/oder der Zeitpunkt t₂ an sich verändernde Alterungsparameter angepasst wird.

Bei einer mittelbaren Bestimmung des Umschaltzeitpunktes t₁ und/oder des Zeitpunktes t₂ aus zumindest einem Alterungsparameter erfolgt die Umstellung von flüssigen auf gasförmigen Kraftstoff vorzugsweise bei einem in der Startphase erreichten Katalysatortemperatur-Schwellwert und/oder kumulierten Energieeintrag-Schwellwert in die Abgasanlage und/oder erreichten Abgasmassenstrom-Schwellwert und/oder erreichten Kühlmitteltemperatur-Schwellwert. Der Umschaltzeitpunkt t₁ und/oder der Zeitpunkt t₂ wird dabei durch das theoretische, beispielsweise aus einem Modell berechnete oder tatsächliche, beispielsweise durch entsprechende Messsonden signalisierte, Erreichen des oder der Schwellwerte bestimmt.

Vorzugsweise wird bei der Bestimmung des Umschaltzeitpunktes t₁ und/oder des Zeitpunktes t₂ aus zumindest einem Alterungsparameter über einen in der Startphase zu erreichender Kühlmitteltemperatur-Schwellwert zusätzlich der Einfluss der Außentemperatur und/oder der Umgebungsdruckes berücksichtigt.

Die Erfindung wird im Weiteren an Hand von Ausführungsbeispielen näher beschrieben. Es zeigen dazu:
- Figur 1:: einen Umschaltvorgang von Benzin auf Gas
- Figur 2:: einen gleitenden Umschaltvorgang von Benzin auf Gas

Das Konzept zum Betrieb des Fahrzeuges ist zur Optimierung des Startverhaltens und zur Verringerung der Gesamtemission derart ausgelegt, dass der Fahrzeugmotor zunächst beim Kaltstart mit Benzin betrieben wird und nach einer Startphase auf den Betrieb mit Erdgas oder einen anderen gasförmigen Kraftstoff umgestellt wird, wobei der weitere Fahrbetrieb mit dem gasförmigen Kraftstoff durchgeführt wird. Der Umschaltzeitpunkt t₁ für die Umstellung auf den gasförmigen Kraftstoff wird in Abhängigkeit von zumindest einem Alterungsparameter des Katalysators derart eingestellt und angepasst, das der Fahrzeugmotor erst bei hinreichend aktivem Katalysator mit dem gasförmigen Kraftstoff betrieben wird.

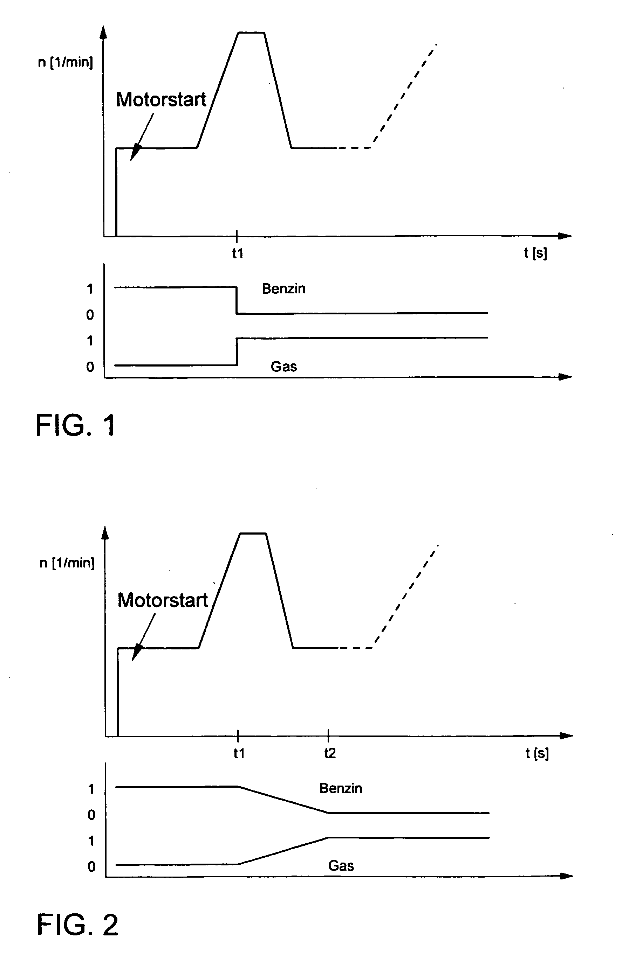

Die Umstellung auf Erdgas oder einen anderen gasförmigen Kraftstoff erfolgt entweder, wie beispielsweise in Fig. 1 dargestellt, zum Umschaltzeitpunkt t₁ oder, wie beispielsweise in Fig. 2 dargestellt, gleitend, wobei die Umstellung auf den gasförmigen Kraftstoff zum Umschaltzeitpunkt t₁ beginnt und nach einer Umstellphase zum Zeitpunkt t₂ beendet ist. Dabei kann der Zeitpunkt t₂ ebenfalls in Abhängigkeit von zumindest einem Alterungsparameter des Katalysators eingestellt und angepasst werden.

Als Alterungsparameter des Katalysators wird die O₂-Speicherfähigkeit des Katalysators durch Auswertung des zeitlichen Versatzes des Signals der λ-Sonde vor dem Katalysator zum Signal der λ-Sonde nach dem Katalysator ermittelt.

Die Bestimmung des Umschaltzeitpunktes t₁ und/oder des Zeitpunktes t₂ aus diesem Alterungsparameter erfolgt mittels Parameterkennlinie. Der so bestimmte Umschaltzeitpunkt t₁ und/oder Zeitpunkt t₂ wird an eine Zeitsteuerung zur Umstellung von Benzin auf Gas nach Start übermittelt. Generell wird dabei die Startphase mit zunehmender Alterung des Katalysators verlängert.

In einer weiteren vorteilhaften Ausgestaltung der Erfindung wird in der Startphase, wie beispielsweise in den Fig. 1 und 2 gezeigt, zumindest bis zum Umschaltzeitpunkt t₁ die Drehzahl des Fahrzeugmotors erhöht. Durch eine erhöhte Leerlaufdrehzahl wird ein höherer Abgasmassenstrom durchgesetzt. Dies führt zu einem früheren Erreichen der Arbeitstemperatur des Katalysators und damit zu einer Verkürzung der Startphase mit Benzinbetrieb und einen früheren Übergang auf den geregelten λ=1,0 - Betrieb.

## Patentansprüche

1. Verfahren zum Betrieb einer bivalenten Brennkraftmaschine mit einer Abgasanlage, welche zumindest einen Katalysator aufweist, bei welchem nach einer Startphase der Brennkraftmaschine von einem Betrieb mit einem flüssigen Kraftstoff auf einen Betrieb mit einem gasförmigen Kraftstoff umgestellt wird, **dadurch gekennzeichnet, dass** die Umstellung zu einem Umschaltzeitpunkt t₁ erfolgt, welcher in Abhängigkeit von zumindest einem Alterungsparameter des Katalysators eingestellt wird.

2. Verfahren nach Anspruch 1, **dadurch gekennzeichnet, dass** bei einem Kaltstart der Brennkraftmaschine zum Startzeitpunkt t₀ ein Betrieb mit flüssigem Kraftstoff eingestellt und nach einer Startphase zum Umschaltzeitpunkt t₁ auf einen Betrieb mit gasförmigem Kraftstoff umgestellt wird.

3. Verfahren nach einem der vorhergehenden Ansprüche, **dadurch gekennzeichnet, dass** die Umstellung auf den gasförmigen Kraftstoff gleitend erfolgt, wobei die Umstellung auf den gasförmigen Kraftstoff zum Umschaltzeitpunkt t₁ beginnt und nach einer Umstellphase zum Zeitpunkt t₂ beendet ist.

4. Verfahren nach einem der vorhergehenden Ansprüche, **dadurch gekennzeichnet, dass** der Zeitpunkt t₂ in Abhängigkeit von zumindest einem Alterungsparameter des Katalysators eingestellt wird.

5. Verfahren nach einem der vorhergehenden Ansprüche, **dadurch gekennzeichnet, dass** zumindest ein Alterungsparameter des Katalysators durch eine On-Board-Diagnose des Katalysators ermittelt wird.

6. Verfahren nach einem der vorhergehenden Ansprüche, **dadurch gekennzeichnet, dass** zumindest ein Alterungsparameter des Katalysators aus einem Modell des Katalysators ermittelt wird.

7. Verfahren nach einem der vorhergehenden Ansprüche, **dadurch gekennzeichnet, dass** zumindest ein Alterungsparameter des Katalysators in einer Motorsteuerung der Brennkraftmaschine abgelegt wird.

8. Verfahren nach einem der vorhergehenden Ansprüche, **dadurch gekennzeichnet, dass** der Umschaltzeitpunkt t₁ und/oder der Zeitpunkt t₂ aus zumindest einer Parameterkennlinie eines Alterungsparameters oder aus zumindest einem Parameterkennfeld zumindest eines Alterungsparameters ermittelt wird.

9. Verfahren nach einem der vorhergehenden Ansprüche, **dadurch gekennzeichnet, dass** als Alterungsparameter die Speicherfähigkeit des Katalysators bezüglich zumindest einer Schadstoffkomponente ermittelt wird.

10. Verfahren nach Anspruch 9, **dadurch gekennzeichnet, dass** als Alterungsparameter eine NOx-Speicherfähigkeit und/oder eine O₂-Speicherfähigkeit des Katalysators ermittelt wird.

11. Verfahren nach einem der vorhergehenden Ansprüche, **dadurch gekennzeichnet, dass** als Alterungsparameter eine Katalysatortemperatur ermittelt wird.

12. Verfahren nach Anspruch 11, **dadurch gekennzeichnet, dass** als Alterungsparameter eine Anspringtemperatur des Katalysators ermittelt wird.

13. Verfahren nach einem der vorhergehenden Ansprüche, **dadurch gekennzeichnet, dass** aus zumindest einem Alterungsparameter ein in der Startphase zu erreichender Katalysatortemperatur-Schwellwert ermittelt wird, durch welchen der Umschaltzeitpunkt t₁ und/oder der Zeitpunkt t₂ bestimmt wird.

14. Verfahren nach einem der vorhergehenden Ansprüche, **dadurch gekennzeichnet, dass** aus zumindest einem Alterungsparameter ein in der Startphase zu kumulierender Energieeintrag-Schwellwert in die Abgasanlage ermittelt wird, durch welchen der Umschaltzeitpunkt t₁ und/oder der Zeitpunkt t₂ bestimmt wird.

15. Verfahren nach einem der vorhergehenden Ansprüche, **dadurch gekennzeichnet, dass** aus zumindest einem Alterungsparameter ein in der Startphase zu erreichender Abgasmassenstrom-Schwellwert ermittelt wird, durch welchen der Umschaltzeitpunkt t₁ und/oder der Zeitpunkt t₂ bestimmt wird.

16. Verfahren nach einem der vorhergehenden Ansprüche, **dadurch gekennzeichnet, dass** aus zumindest einem Alterungsparameter ein in der Startphase zu erreichender Kühlmitteltemperatur-Schwellwert ermittelt wird, durch welchen der Umschaltzeitpunkt t₁ und/oder der Zeitpunkt t₂ bestimmt wird.

17. Verfahren nach Anspruch 13, **dadurch gekennzeichnet, dass** aus zumindest einem Alterungsparameter und einer ermittelten Außentemperatur und/oder eines ermittelten Umgebungsdruckes ein in der Startphase zu erreichender Kühlmitteltemperatur-Schwellwert ermittelt wird, durch welchen der Umschaltzeitpunkt t₁ und/oder der Zeitpunkt t₂ bestimmt wird.

18. Verfahren nach einem der vorhergehenden Ansprüche, **dadurch gekennzeichnet, dass** in der Startphase zumindest bis zum Umschaltzeitpunkt t₁ die Drehzahl der Brennkraftmaschine erhöht wird.

19. Bivalenten Brennkraftmaschine welche eine Abgasanlage mit zumindest einem Katalysator und eine Steuereinrichtung zum Umstellen von einem Betrieb mit einem flüssigem Kraftstoff auf einen Betrieb mit einem gasförmigen Kraftstoff nach einer Startphase umfasst, **dadurch gekennzeichnet, dass** die Steuereinrichtung Komponenten zur Einstellung eines Umschaltzeitpunktes t₁ in Abhängigkeit von zumindest einem Alterungsparameter des Katalysators aufweist.

20. Bivalente Brennkraftmaschine nach Anspruch 19, **dadurch gekennzeichnet, dass** die Steuereinrichtung in einer Motorsteuerung der Brennkraftmaschine integriert ist.

21. Bivalente Brennkraftmaschine nach Anspruch 19 oder 20, **dadurch gekennzeichnet, dass** die Steuereinrichtung Komponenten zur Einstellung des Umschaltzeitpunktes t₁ und einer gleitenden Umstellungsphase bis zum Zeitpunkt t₂ in Abhängigkeit von zumindest einem Alterungsparameter des Katalysators aufweist.

## Claims

1. Method for operating a bivalent internal combustion engine having an exhaust system which has at least one catalytic converter, in which method, after a start phase of the internal combustion engine, a switch is made from an operating mode with a liquid fuel to an operating mode with a gaseous fuel, **characterized in that** the switch takes place at a switching time t₁ which is set as a function of at least one ageing parameter of the catalytic converter.

2. Method according to Claim 1, **characterized in that,** in the event of a cold start of the internal combustion engine, an operating mode with liquid fuel is set at the starting time to and, after a starting phase, a switch is made to an operating mode with gaseous fuel at the switching time t₁.

3. Method according to one of the preceding claims, **characterized in that** the switch to the gaseous fuel takes place smoothly, with the switch to the gaseous fuel starting at the switching time t₁ and ending, after a changeover phase, at the time t₂.

4. Method according to one of the preceding claims, **characterized in that** the time t₂ is set as a function of at least one ageing parameter of the catalytic converter.

5. Method according to one of the preceding claims, **characterized in that** at least one ageing parameter of the catalytic converter is determined by means of an on-board diagnosis of the catalytic converter.

6. Method according to one of the preceding claims, **characterized in that** at least one ageing parameter of the catalytic converter is determined from a model of the catalytic converter.

7. Method according to one of the preceding claims, **characterized in that** at least one ageing parameter of the catalytic converter is stored in an engine controller of the internal combustion engine.

8. Method according to one of the preceding claims, **characterized in that** the switching time t₁ and/or the time t₂ is determined from at least one parameter characteristic curve of an ageing parameter or from at least one parameter characteristic map of at least one ageing parameter.

9. Method according to one of the preceding claims, **characterized in that,** as an ageing parameter, the storage capacity of the catalytic converter for at least one pollutant component is determined.

10. Method according to Claim 9, **characterized in that,** as an ageing parameter, a NOx storage capacity and/or an O₂ storage capacity of the catalytic converter is determined.

11. Method according to one of the preceding claims, **characterized in that**, as an ageing parameter, a catalytic converter temperature is determined.

12. Method according to Claim 11, **characterized in that,** as an ageing parameter, a light-off temperature of the catalytic converter is determined.

13. Method according to one of the preceding claims, **characterized in that** a catalytic converter temperature threshold value to be attained in the start phase is determined from at least one ageing parameter, with the switching time t₁ and/or the time t₂ being determined by means of said catalytic converter temperature threshold value.

14. Method according to one of the preceding claims, **characterized in that** an energy input threshold value, to be cumulated in the start phase, of energy input into the exhaust system is determined from at least one ageing parameter, with the switching time t₁ and/or the time t₂ being determined by means of said energy input threshold value.

15. Method according to one of the preceding claims, **characterized in that** an exhaust-gas mass flow threshold value to be attained in the start phase is determined from at least one ageing parameter, with the switching time t₁ and/or the time t₂ being determined by means of said exhaust-gas mass flow threshold value.

16. Method according to one of the preceding claims, **characterized in that** a coolant temperature threshold value to be attained in the start phase is determined from at least one ageing parameter, with the switching time t₁ and/or the time t₂ being determined by means of said coolant temperature threshold value.

17. Method according to Claim 13, **characterized in that** a coolant temperature threshold value to be attained in the start phase is determined from at least one ageing parameter and a determined outside temperature and/or a determined ambient pressure, with the switching time t₁ and/or the time t₂ being determined by means of said coolant temperature threshold value.

18. Method according to one of the preceding claims, **characterized in that** the rotational speed of the internal combustion engine is increased in the start phase at least up to the switching time t₁.

19. Bivalent internal combustion engine which comprises an exhaust system having at least one catalytic converter and comprises a control device for switching from an operating mode with a liquid fuel to an operating mode with a gaseous fuel after a start phase, **characterized in that** the control device has components for setting a switching time t₁ as a function of at least one ageing parameter of the catalytic converter.

20. Bivalent internal combustion engine according to Claim 19, **characterized in that** the control device is integrated in an engine controller of the internal combustion engine.

21. Bivalent internal combustion engine according to Claim 19 or 20, **characterized in that** the control device has components for setting the switching time t₁ and a smooth changeover phase up to the time t₂ as a function of at least one ageing parameter of the catalytic converter.

## Revendications

1. Procédé d'utilisation d'un moteur à combustion interne bivalent doté d'une installation de gaz d'échappement qui présente au moins un catalyseur, et dans lequel après une phase de démarrage du moteur à combustion interne, on bascule d'un mode de fonctionnement avec un carburant liquide à un mode de fonctionnement avec un carburant gazeux,
**caractérisé en ce que**
le basculement s'effectue à un instant de basculement t₁ qui est réglé en fonction d'au moins un paramètre de vieillissement du catalyseur.

2. Procédé selon la revendication 1, **caractérisé en ce qu'**en cas de démarrage à froid du moteur à combustion interne, c'est un mode de fonctionnement au carburant liquide qui est réglé à l'instant de démarrage t₀ et **en ce qu'**après la phase de démarrage, on bascule à un mode de fonctionnement au carburant gazeux à l'instant de basculement t₁.

3. Procédé selon l'une des revendications précédentes, **caractérisé en ce que** le basculement au carburant gazeux s'effectue de manière progressive, le basculement au carburant gazeux commençant à l'instant de basculement t₁ et étant terminé à un instant t₂ après une phase de basculement.

4. Procédé selon l'une des revendications précédentes, **caractérisé en ce que** l'instant t₂ est réglé en fonction d'au moins un paramètre de vieillissement du catalyseur.

5. Procédé selon l'une des revendications précédentes, **caractérisé en ce qu'**au moins un paramètre de vieillissement du catalyseur est déterminé par un diagnostic embarqué du catalyseur.

6. Procédé selon l'une des revendications précédentes, **caractérisé en ce qu'**au moins un paramètre de vieillissement du catalyseur est déterminé à partir d'un modèle du catalyseur.

7. Procédé selon l'une des revendications précédentes, **caractérisé en ce qu'**au moins un paramètre de vieillissement du catalyseur est conservé en mémoire dans la commande du moteur à combustion interne.

8. Procédé selon l'une des revendications précédentes, **caractérisé en ce que** l'instant de basculement t₁ et/ou l'instant t₂ sont déterminés à partir d'au moins une ligne caractéristique d'un paramètre de vieillissement ou à partir d'au moins un champ de caractéristiques d'au moins un paramètre de vieillissement.

9. Procédé selon l'une des revendications précédentes, **caractérisé en ce que** comme paramètre de vieillissement, on détermine la capacité du catalyseur à accumuler au moins un composant toxique.

10. Procédé selon la revendication 9, **caractérisé en ce que** comme paramètre de vieillissement, on détermine la capacité d'accumulation de NOₓ et/ou la capacité d'accumulation de O₂ du catalyseur.

11. Procédé selon l'une des revendications précédentes, **caractérisé en ce que** comme paramètre de vieillissement, on détermine la température du catalyseur.

12. Procédé selon la revendication 11, **caractérisé en ce que** comme paramètre de vieillissement, on détermine la température d'activation du catalyseur.

13. Procédé selon l'une des revendications précédentes, **caractérisé en ce qu'**une valeur de seuil de la température que le catalyseur doit atteindre dans la phase de démarrage et par laquelle l'instant de basculement t₁ et/ou l'instant t₂ sont déterminés est déterminée à partir d'au moins un paramètre de vieillissement.

14. Procédé selon l'une des revendications précédentes, **caractérisé en ce qu'**une valeur de seuil de l'apport cumulé d'énergie dans l'installation de gaz d'échappement au cours de la phase de démarrage, par laquelle l'instant de basculement de t₁ et/ou l'instant t₂ sont déterminés est déterminée à partir d'au moins un paramètre de vieillissement.

15. Procédé selon l'une des revendications précédentes, **caractérisé en ce qu'**une valeur de seuil de l'écoulement massique de gaz d'échappement qu'il faut atteindre au cours de la phase de démarrage et par laquelle l'instant de basculement t₁ et/ou l'instant t₂ sont déterminés est déterminée à partir d'au moins un paramètre de vieillissement.

16. Procédé selon l'une des revendications précédentes, **caractérisé en ce qu'**une valeur de seuil de la température que doit atteindre le fluide de refroidissement au cours de la phase de démarrage et par laquelle l'instant de basculement t₁ et/ou l'instant t₂ sont déterminés est déterminée à partir d'au moins un paramètre de vieillissement.

17. Procédé selon la revendication 13, **caractérisé en ce qu'**une valeur de seuil que doit atteindre la température du fluide de refroidissement pendant la phase de démarrage et par laquelle l'instant de basculement t₁ et/ou l'instant t₂ sont déterminés est déterminée à partir d'au moins un paramètre de vieillissement et d'une température extérieure déterminée et/ou de la pression ambiante déterminée.

18. Procédé selon l'une des revendications précédentes, **caractérisé en ce qu'**au cours de la phase de démarrage, la vitesse de rotation du moteur à combustion interne est augmentée au moins jusqu'à l'instant de basculement t₁.

19. Moteur à combustion interne bivalent qui présente une installation de gaz d'échappement qui présente au moins un catalyseur et un dispositif de commande qui assure le basculement d'un mode de fonctionnement à carburant liquide à un mode de fonctionnement à carburant gazeux après une phase de démarrage,
**caractérisé en ce que**
le dispositif de commande présente des composants de réglage d'un point de basculement t₁ en fonction d'au moins un paramètre de vieillissement du catalyseur.

20. Moteur à combustion interne bivalent selon la revendication 19, **caractérisé en ce que** le dispositif de commande est intégré dans la commande du moteur à combustion interne.

21. Moteur à combustion interne bivalent selon les revendications 19 ou 20, **caractérisé en ce que** le dispositif de commande présente des composants de réglage de l'instant de basculement t₁ et d'une phase glissante de basculement jusqu'à l'instant t₂ en fonction d'au moins un paramètre de vieillissement du catalyseur.
